# EUROPEAN PATENT APPLICATION

(11) **EP 3 804 960 A1**
(43) Date of publication of application: **14.04.2021**
(21) Application number: 19202731.6
(22) Date of filing: 11.10.2019
(51) Int. Cl.: B29C 51/44, B29C 51/26, B23K 26/08, B23K 26/36, B26F 1/00, B26F 1/38, B26F 1/40, B26F 1/18, B23K 26/00, B23K 26/38, B23K 26/361, B23K 26/359

(54) **THERMOFORMING MACHINE AND PROCESS**

(71) Applicant: WM Thermoforming Machines SA, 6855 Stabio (CH)
(72) Inventor: GOTTI, Dario, 6855 Stabio (CH)
(74) Representative: M. Zardi & Co S.A.

(57) **Abstract**

A continuous thermoforming machine comprising a forming station for thermoforming articles (A) from a continuous sheet (10) of a thermoformable material and at least one laser station (141-146) for subsequent processing of the articles.

## Description

### Field of the invention

The present invention relates to a thermoforming machine and a thermoforming process, in particular for the production of plastic articles.

### Prior art

Thermoforming is widely used for the hot-molding of plastic items such as plates, cups, trays, tubs, etc.

In a thermoforming machine, a sheet of a suitable material is heated and fed into a forming station which typically comprises a mold operated by a press. For each working cycle of the press, one or more articles are thermoformed on the sheet.

Subsequent processing steps may include cutting the sheet along the perimeter of the thermoformed articles and making apertures or weakened parts at selected locations of the articles.

In the prior art, the above subsequent steps are performed with cutting stations comprising a die and punch assembly. The die and punch assembly comprises a set of blades arranged to cut the thermoformed sheet according to a certain pattern.

A disadvantage is that the die and punch assembly has to be reconfigured whenever the production requires a change in the shape, size, and/or features of the articles. Particularly, different sets of die and punch need be provided, which are expensive items, and their replacement in the machine requires time and well trained personnel. Reconfiguration of the assembly is therefore expensive and limits the flexibility of the production.

Still another need is the impression of certain data on the articles like e.g. a serial number; a trademark; the name of the manufacturer; instructions or symbols for the user, etc. Also this operation is performed, in the prior art, with molds which need be reconfigured to change the impressed data.

All the above constitutes a limitation of the flexibility of the machine.

### Summary of the invention

The object of the invention is to overcome the above mentioned drawbacks of the prior art. Particularly a scope of the invention is to provide a thermoforming machine and process where cutting, trimming or finishing steps of the thermoformed articles can be easily and rapidly adapted to different articles.

The above scope is reached with a thermoforming machine and process according to the claims.

The invention concerns a thermoforming machine and process of the continuous type, wherein a continuous sheet of a thermoformable material is processed.

The thermoformable sheet is a sheet of indefinite length which is typically unwound from a source reel at an input end of the machine or continuously fed by an extruder. The sheet, after separation of the thermoformed articles, may be wound on another reel at an opposite side of the machine.

The machine and process of the invention is preferably in-line so that all process stations are aligned according to a main process direction, which is also a direction of transport of the thermoformable sheet.

According to the invention, the thermoforming machine includes at least one laser process station for subsequent processing of the articles after they are thermoformed. The laser station, to this purpose, is located downstream a forming station. The laser station includes at least one laser emitter arranged to irradiate the sheet or the articles and having a sufficient power to remove or cut the thermoformable material (e.g. to cause a local sublimation of the thermoformable material).

Said laser station, which operates continuously in accordance with the working cycle of the machine, can be advantageously configured to perform one or more of the following operations.

A first option is to laser cut the thermoformable sheet around the contour of thermoformed articles. The cut can be performed on a portion of the contour leaving the articles attached to each other and to the sheet. A related advantage is that after the laser cut, the articles can be transported collectively and maintaining their relative position and alignment, which is advantageous for accurate processing of the articles.

Another option is to laser cut the thermoformable sheet around the entire contour of the articles so that the articles are individually separated from the sheet by the laser cut. This operation is commonly referred to as trimming of the articles.

Another option is to cut or perforate the articles at selected location. Cuts or perforations may be required by the intended use of the articles. Examples of cuts that can be made in this step are cross-shaped cuts or C-shaped cuts.

Another option is to form weakened portions on the articles. A weakened portion for example may be a rupturable portion for the use of the articles, e.g. to open or remove a plastic cover. The weakened portion may be a portion having a reduced thickness.

Still another option is to engrave data on the articles. The laser beam may be used to engrave relevant data such as a bar code, serial number, symbols, etc.

In all the above steps, the laser beam may cause melting or sublimation of the thermoformable material, so that the thermoformable material is removed where required with a great precision.

The great advantage of the invention is the easy adaptation of the laser processing station to different articles or different processing patterns (e.g. cutting patterns) compared to the conventional mechanical stations. The term of processing pattern may denote, for example, trimming around a different contour of the articles, a different number, shape or distribution of cuts or perforation or weakened portions, the engraving of different data. For example, in a laser cutting station, a different cutting pattern can be obtained by simply redirecting the laser beams, without the need to replace blades of a conventional press-operated cutting station.

Accordingly, a machine and process according to the invention exhibit a greater flexibility in the production of articles with a different shape and/or different features.

### Description of preferred embodiments

A machine according to the invention may include one or several laser stations, each configured to perform the same or a different operation. Any reference to a laser station shall be understood with reference to a single laser station or a plurality thereof..

The laser station or any laser station may include one or more laser emitter(s). The laser emitters may be located above or under the thermoformable sheet. Accordingly the sheet can be irradiated from above or from below.

The laser station or any laser station may be traversed by the transportation path of the transport system so that, during the use, the continuous thermoformable sheet carrying the articles attached thereto is passed through the laser station for laser processing of the articles.

In an embodiment, a laser station can be used to replace a conventional process station, e.g. a press-operated process station. A machine of the invention can be configured, for example by programming a control system of the machine, to perform a process step selectively in the press-operated station to process the articles according to a first pattern, or in the laser station to process the articles according to a second and different pattern. In this case the laser station is preferably adjacent before or after the press-operated station. When the conventional station is used, the laser station may remain inactive and the other way around.

The above referred process step may be any process step after thermoforming the articles, to obtain desired features of the articles. For example it can be a punching or trimming step.

The conventional station may be used for first products while the laser station may be used for second products, so that the machine can pass from the first products to the second products without reconfiguring the press-operated station. Referring for example to a cutting operation, the conventional station may be used for fast mass production of the first products with a simple cutting pattern, while the laser station may be used for products with a more elaborated cutting pattern. The machine can switch quickly from the production of the first articles to the production of the second articles. In this example, the terms of first articles and second articles may denote articles of a different shape or the same articles with different features.

In an embodiment, the laser processing of the articles is performed while the articles are attached to, and transported with, the thermoformable sheet. The laser station is arranged accordingly.

In another embodiment, the machine includes a trimming station wherein the articles are individually separated from the sheet; a stacking station for stacking the articles, an article transport system arranged to transport the articles from the trimming station to the stacking station; a transfer system arranged to transfer the individual articles from the trimming station to the conveyor. Said laser station is arranged along the path of the conveyor to operate on the articles after their separation from the sheet and during the transport to the stacking station.

The invention is now elucidated with the help of the figures, wherein:
Fig. 1 is a simplified scheme of a continuous thermoforming machine according to a first embodiment.
Fig. 2 is a scheme of a second embodiment.
Fig. 3 is a scheme of a third embodiment.

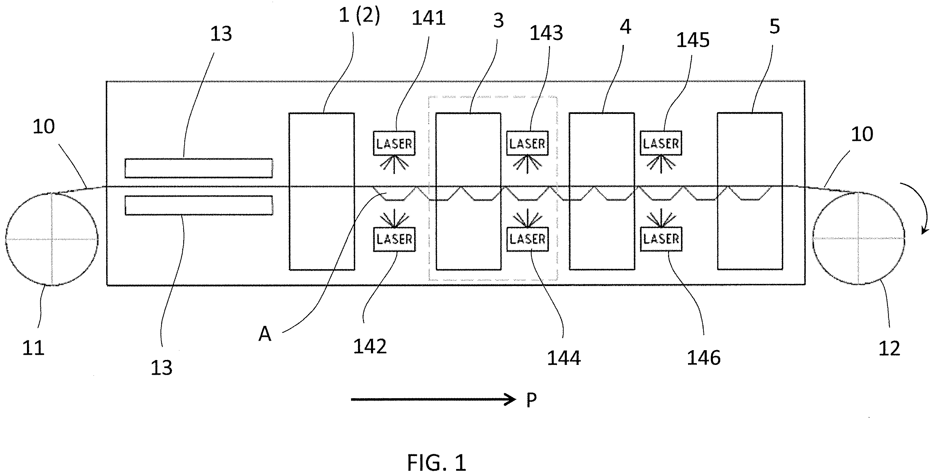

In Fig. 1, a thermoforming machine comprises: a forming station 1, a punching station 3, a cutting station 4, a stacking station 5.

The machine operates with a continuous sheet 10 of a thermoformable material (thermoformable sheet) which is unwound from a source reel 11.

The sheet 10 for example is made of polypropylene or polypropylene-based material suitable for the thermoforming process.

In an alternative embodiment (not shown) the sheet 10 (e.g. a plastic film) is fed by an extruder.

A sheet transport system carries the sheet 10 through the above mentioned process stations. The remainder of the sheet, after separation of the thermoformed articles, is wound on a reel 12. The sheet transport system may include for example means adapted to engage the lateral edges of the sheet 10.

Preferably the process stations of the machine, in this example represented by the forming station 1, the punching station 3, the cutting station 4 and the stacking station 5, are arranged in-line according to a process direction P which is also the direction of transport of the sheet 10.

The sheet 10 is first passed through heaters 13 to heat the material to a temperature suitable for the thermoforming process. The thermoforming process is carried out in the forming station 1, where articles A are thermoformed in the sheet 10.

The forming station 1 includes a thermoforming mold. Said mold may comprise a bottom half-mold and a top half-mold operated by a press.

The punching station 3 forms cuts or holes in the articles A. The cutting station 4 cuts the sheet 10 around the contour of the articles A, leaving small connection bridges of thermoformable material between the articles so that they remain attached to each other and to the sheet and can still be transported, together with the sheet, by the sheet transport system.

The machine may include laser stations 141 to 146. It shall be noted that references 141 to 146 denote possible locations of a laser station in the machine, but only some of them can be provided according to the needs.

Lasers stations 141, 143 and 145 are placed above the sheet 10 and laser stations 142, 144 and 146 are below the sheet 10.

Said laser stations 141-146 may perform process steps in addition to, or to replace, the steps performed by the conventional process stations. For example the laser stations 141, 142 or 143, 144 may cut or perforate the articles in addition to the action of the station 3 or 4. The laser stations 145, 146 may also be used to separate the articles, by cutting the sheet 10, before they are stacked in the station 5.

For example, the machine may have a control system which is programmable to process the articles selectively in the punching station 3 or in one or more laser stations, e.g. the stations 141, 142 or 143, 144 adjacent to the punching station 3.

For example the machine may operate in a first mode wherein a perforation pattern is obtained by punching action of the station 3, and may operate in a second mode wherein a different perforation pattern is obtained in one or more of the laser stations 141, 142, 143, 144 and the station 3 remains inactive.

Similarly, the action of the cutting station 4 may be replaced by one or more of the adjacent laser stations 143, 144, 145, 146.

Any of the laser stations of Fig. 1 may however be used for another process step, for example to engrave data on the articles. Said data may include identification data, symbols or instructions for the user, etc.

In a variant of Fig. 1, the forming station 1 may be replaced by an integrated forming and cutting station denoted in Fig. 1 with the reference 2.

In the forming and cutting station 2, the articles A are formed and the sheet 10 is also cut along the contour of the articles, but leaving the articles attached each other and attached to the sheet, so that they can be moved with the sheet 10 through the subsequent stations. In this variant, since cutting is performed directly in the first station 2, the station 4 may not be necessary.

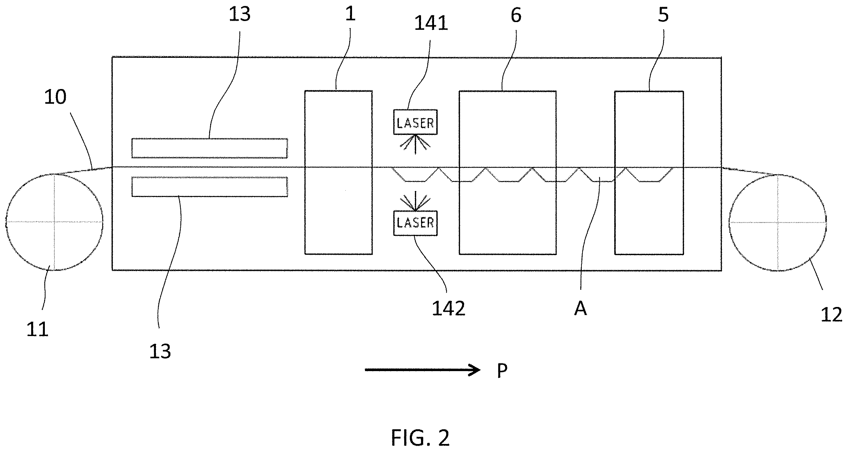

Fig. 2 illustrates a second embodiment of a machine including a forming station 1 followed by a trimming station 6 and a stacking station 5. In the trimming station 6, the articles A are individually separated from the sheet 10, i.e. the sheet is cut along the entire contour of the articles. In Fig. 2 the laser stations 141, 142 may replace the trimming station 6 (e.g. to produce different articles) or may perform an additional process step, like making cuts or perforations in the articles and/or data engraving.

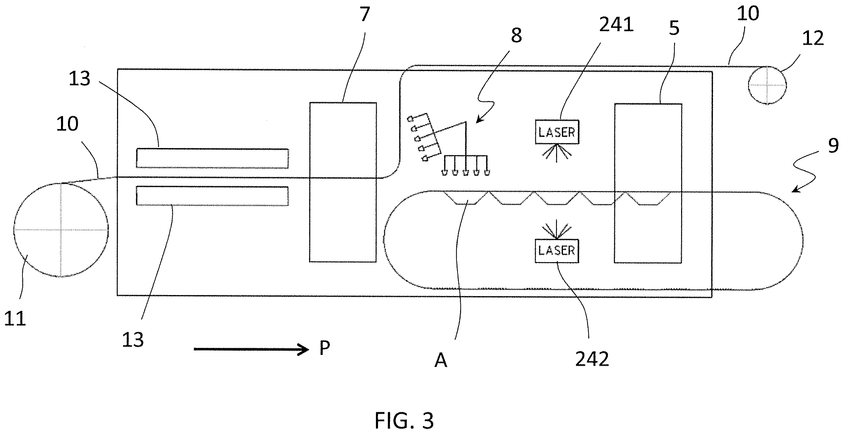

Fig. 3 illustrates a third embodiment including an integrated forming and trimming station 7, a transfer system 8, a product conveyor 9, a stacking station 5.

The articles A are individually separated from the sheet 10 in the integrated station 7. The transfer system 8 picks the articles from the station 7 and deposits the articles on the conveyor 9. To this purpose the transfer system 8 comprises a suitable picking tool movable between a first position for picking the articles from the station 7 and a second position for depositing the articles on the conveyor 9.

A laser station 141 is arranged along the path of the conveyor 9 to process the articles (e.g. engraving data) during the transfer from the station 7 to the stacking station 5.

## Claims

1. A continuous thermoforming machine comprising:
a sheet transport system adapted to transport a continuous thermoformable sheet (10) through the machine in accordance with a process direction (P);
a forming station (1) for thermoforming articles (A) in the sheet (10);
**characterized in that** it comprises a laser station (141-146) for subsequent processing of the thermoformed articles, said laser station being mounted in-line in the thermoforming machine downstream the forming station according to said process direction.

2. Thermoforming machine according to claim 1, wherein said laser station (141-146) is configured to perform at least one of the following operations:
to laser cut the thermoformable sheet around a portion of the contour of thermoformed articles so that the articles remain attached to each other;
to laser cut the thermoformable sheet around the entire contour of the articles so that the articles are individually separated from the sheet;
to cut or perforate the articles;
to form weakened portions on the articles;
to engrave data on the articles.

3. Thermoforming machine according to claim 1 or 2 wherein said laser station includes one or more laser emitters located above or under the thermoformable sheet.

4. Thermoforming machine according to any of the previous claims, wherein said laser station is traversed by the transportation path of said sheet transport system so that, during the use, the continuous thermoformable sheet (10) carrying the thermoformed articles (A) travels through the laser station for laser processing of the articles attached to the sheet.

5. Thermoforming machine according to any of the previous claims, comprising a press-operated process station (3) for subsequent processing of the thermoformed articles, and at least one laser station (143) configured to perform the same processing as the press-operated station, wherein the machine can be configured to perform a process step selectively in the press-operated station or in said laser station.

6. Thermoforming machine according to claim 5, wherein the process step that can be selectively performed in the press-operated station or in the laser station includes cutting sheet along the contour of the articles or making holes or perforations in the articles.

7. Thermoforming machine according to any of the previous claims, wherein the thermoformable sheet (10) is unwound from a source reel (11) at an input side of the machine or is continuously fed by an extruder.

8. Thermoforming machine according to any of the previous claims wherein the laser station is arranged to process the articles while the articles are attached to the thermoformable sheet.

9. Thermoforming machine according to any of claims 1 to 7 comprising a trimming station (7) wherein the articles (A) are individually separated from the sheet (10); a stacking station (5) for stacking the articles, a product transport system (9) arranged to transport the individual articles from the trimming station to the stacking station; a transfer system (8) arranged to transfer the individual articles from the trimming station to the product transport system, wherein a laser station (241, 242) is arranged along the path of the product transport system (9) for laser processing of the articles (A) during transportation to the stacking station (5).

10. Thermoforming machine according to any of the previous claims, comprising a plurality of laser stations at different locations of the machine and having the same function or different functions.

11. A thermoforming process comprising:
feeding a continuous sheet (10) of a thermoformable material to a forming station of a thermoforming machine and forming articles (A) in the sheet (10);
passing the articles (A), or the thermoformable sheet (10) carrying the articles (A) attached thereto, through a laser station (141-146) which is part of said machine and is located downstream said forming station in a process direction (P),
performing an in-line laser processing step of the articles in the laser station, by exposing the sheet and/or the articles to a laser beam adapted to cut or remove the thermoformable material.

12. A process according to claim 11, wherein said laser processing step includes at least one of the following:
to laser cut the thermoformable sheet around a portion of the contour of thermoformed articles so that the articles remain attached to each other,
to laser cut the thermoformable sheet around the entire contour of the articles so that the articles are individually separated from the sheet,
to cut or perforate the articles,
to form weakened portions on the articles,
to engrave data on the articles.

13. A process according to claim 11 or 12, wherein a process step is selectively performed in a press-operated station or in a laser station according to a desired pattern or according to different kind of articles.

14. A process according to any of claims 11 to 13 wherein the laser processing is performed on articles still attached to the thermoformable sheet.

15. A process according to any of claims 11 to 13, comprising a trimming step wherein the articles are individually separated from the sheet; transporting the articles after separation from the sheet to a stacking station, laser processing the articles during the transportation to the stacking station.
